# EUROPEAN PATENT APPLICATION

(11) **EP 4 455 917 A1**
(43) Date of publication of application: **30.10.2024**
(21) Application number: 22910476.5
(22) Date of filing: 14.09.2022
(51) Int. Cl.: G06F 21/56, G06F 12/14

(54) **DATA SHARING DEVICE, COMMUNICATION SYSTEM, AND COMMUNICATION METHOD**

(30) Priority: 20.12.2021 JP 2021206336
(71) Applicant: Hitachi Industrial Equipment Systems Co., Ltd., Tokyo 101-0021 (JP)
(72) Inventor: KOHIYAMA, Tomohisa, Tokyo 101-0021 (JP); MIKAMI, Shugo, Tokyo 100-8280 (JP); IMAI, Mitsuhiro, Tokyo 100-8280 (JP)
(74) Representative: MERH-IP Matias Erny Reichl Hoffmann Patentanwälte PartG mbB
(86) International application number: PCT/JP2022/034468
(87) International publication number: WO 2023/119750

(57) **Abstract**

A data sharing device includes: a first environment having a first communication port; a second environment having a second communication port and operating independently of the first environment; and a shared memory accessible from both the first environment and the second environment, wherein the first environment comprises a data receive unit which store data received via the first communication port in the shared memory, wherein the second environment includes: a dedicated memory accessible only from within said the second environment; a data acquisition unit for writing the data stored in the shared memory to the dedicated memory; an inspection unit checking security of the data stored in the dedicated memory; and a data transmission unit configured to transmit data stored in the dedicated memory to the outside of the data sharing device via the second communication port.

## Description

### Technical Field

The present invention relates to a data sharing device, a communication system, and a communication method.

### Background Art

There is a need to move data securely. PTL 1 discloses a control device that controls a facility or a machine, the control device including: hardware resources including one or more processors and a storage device; a real-time operating system (OS) that is executed using the hardware resources; a general-purpose operating system (OS) that is executed using the hardware resources and operates independently of the real-time OS; and a the hypervisor that manages hardware resources allocated to the real-time OS and the general-purpose OS, the control device including: a file sharing server function that operates on the general-purpose OS and secures a partial area of the storage device as a storage area and shares at least a user-set partial area of the secured storage area with another device; a function that operates on the real-time OS and participates as a client in the file sharing server function via the hypervisor; and a function that periodically monitors whether or not a shared area provided by the file sharing server function is accessible.

### Citation List

### Patent Literature

[Patent Document 1] Japanese Laid-open Patent publication No. 2017-187993

### Summary of Invention

### Technical Problem

A computer connected to a network capable of accessing a wide area network such as the Internet can easily obtain various update programs and keep the computer up to date. On the other hand, a computer that is not connected to a network or a computer that belongs only to a network that is not connected to the outside has a high acquisition cost of an update program, and it is not easy to keep programs installed on such computers up to date. The high acquisition cost is not only the cost of man-hours in the work of copying the update program to a portable medium, bringing the portable medium to the site, and manually performing the update work, but also, for example, there is a background that it is dangerous to update a computer or the like incorporating a control program unless the operation of the existing control program is adversely affected or all functions are evaluated (checked) when the update program is introduced. Since this evaluation takes a lot of time and cost, it is not practical to update programs installed on such computers every time the update program is released to public where daily production cannot be stopped. As a result, in order to ensure security, it is often the case that a network is not connected or a network is connected without being connected to the outside. This is a universal problem at present when cyber security is important. When electronic data is acquired from a computer that is not kept in the latest state, it is necessary to adopt a method that prevents malware from intruding into the computer. In addition, assuming a case where the computer is already infected with malware for some reason, even if the electronic data generated by the computer is contaminated with malware, it is necessary to adopt a method of preventing the data contaminated with the malware from being further diffused by blocking the distribution of the data. In the invention described in Patent Literature 1, there is room for improvement in information exchange.

### Solution to Problem

According to the 1st aspect of the present invention, a data sharing device includes: a first environment having a first communication port; a second environment having a second communication port and operating independently of the first environment; and a shared memory accessible from both the first environment and the second environment, wherein the first environment comprises a data receive unit which store data received via the first communication port in the shared memory, wherein the second environment includes: a dedicated memory accessible only from within said the second environment; a data acquisition unit for writing the data stored in the shared memory to the dedicated memory; an inspection unit checking security of the data stored in the dedicated memory; and a data transmission unit configured to transmit data stored in the dedicated memory to the outside of the data sharing device via the second communication port.

According to the 2nd aspect of the present invention, a communication system includes: a terminal for receiving data of an industrial machine; and a server for communicating with the terminal, wherein the terminal comprises two or more independent execution environments and a shared memory accessible from a plurality of the execution environments, wherein one of the execution environments communicates with the industrial machine, another one of the execution environments communicates with the server, and the execution environment communicating with the server is set so as not to be able to write to the shared memory.

According to the 3rd aspect of the present invention, a communication method performed by a data sharing device includes a first environment having a first communication port, a second environment having a second communication port and operating independently of the first environment, and a shared memory accessible from both the first environment and the second environment, the method includes: wherein the second environment includes a dedicated memory accessible only from within the second environment, and storing, by a program executed in the first environment, data received via the first communication port in the shared memory; wherein a program executed in the second environment executing: writing the data stored in the shared memory to the dedicated memory; verifying security of the data stored in the dedicated memory; and transmitting the data stored in the dedicated memory to the outside of the data sharing device via the second communication port.

### Advantageous Effects of Invention

According to the present invention, information can be transmitted and received safely.

### Brief Description of Drawings

FIG.1 is a functional block diagram of a data sharing device;
FIG.2 is a block diagram of a data sharing device according to the first embodiment;
FIG.3 is a block diagram of a data sharing device 1 according to a first modification;
FIG.4 is a block diagram of a data sharing device according to the second embodiment;

### Description of Embodiments

### -First Embodiment-

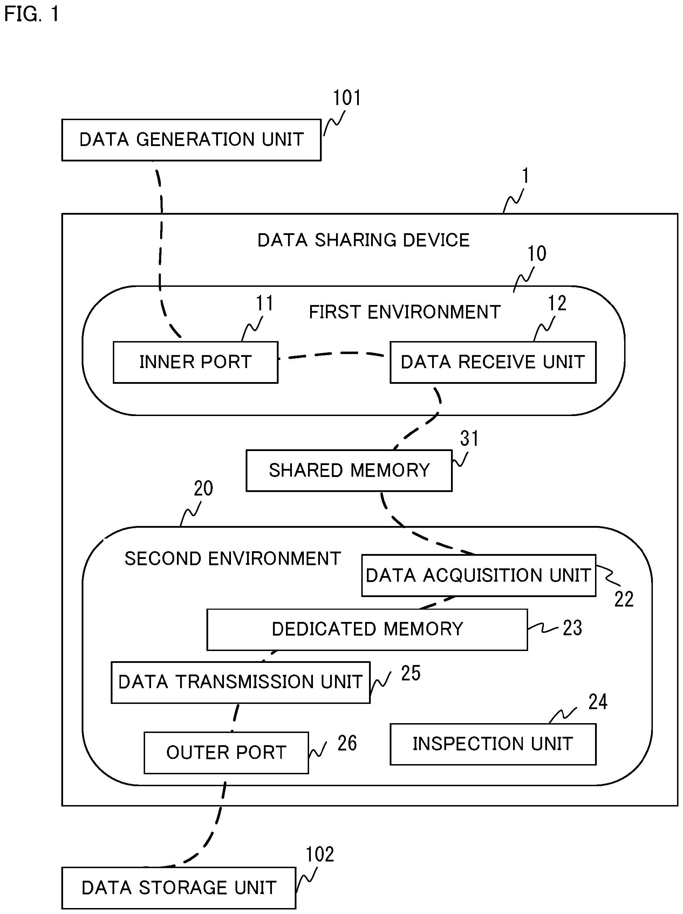

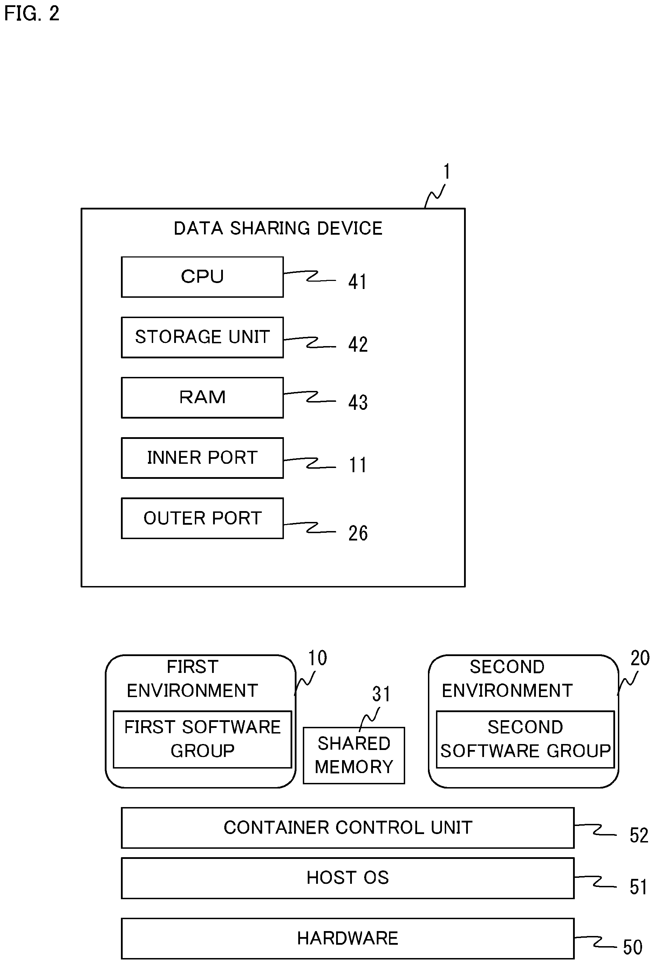

A first embodiment of a data sharing device will be described below with reference to FIGS. 1 and 2.

FIG.1 is a functional configuration diagram of the data sharing device 1. The data sharing device 1 stores data generated by the data generation unit 101 shown in the upper part of the figure in the data storage unit 102 shown in the lower part of the figure. In FIG.1, a curve indicated by a broken line from the data generation unit 101 to the data storage unit 102 via the data sharing device 1 represents a data path. Hereinafter, the data sharing device 1 and the data storage unit 102 are also collectively referred to as a "communication system ".

the data generation unit 101 is, for example, a relatively old arithmetic device having a substantially fixed configuration, and security measures are not perfect. As described in the section of the problem to be solved by the invention, when the latest update program cannot be introduced even in a new device, it can be similarly considered that the security measure is not perfect. The data generation unit 101 is operated without being connected to, for example, an intranet (local area network) of the organization having a communication path connected to the Internet, or the like, and is not provided with a software update program (patch) or the like. The data generation unit 101 can also be referred to as a device that assists or substitutes for work performed by humans in various industries. In this case, the data generation unit 101 can be referred to as an "industrial device ". The data storage unit 102 is an arithmetic device, for example, a server, which is connected to a local area network or the Internet and in which various kinds of software can be used. The data storage unit 102 generally has a large-capacity data storage area. This may be separated as a storage device.

The data sharing device 1 includes a first environment 10, a second environment 20, and a shared memory 31. The shared memory may be read as a shared folder as an image of the storage device. The first environment 10 includes a inner port 11 and a data receive unit 12. The second environment 20 includes a data acquisition unit 22, a dedicated memory 23, an inspection unit 24, a data transmission unit 25, and an outer port 26. Hereinafter, the inner port 11 is also referred to as a "first communication port ", and the outer port 26 is also referred to as a" second communication port".

The first environment 10 and the second environment 20 operate independently. There is no communication between the first environment 10 and the second environment 20, and there is no data storage area other than the shared memory 31 that can be accessed by both. The shared memory 31 is a storage area accessible only by the data receive unit 12 of the first environment 10 and the data acquisition unit 22 of the second environment 20. However, the shared memory 31 permits at least writing to the data receive unit 12 and permits reading to the data acquisition unit 22. In other words, the shared memory 31 may not permit the data receive unit 12 to read data or may not permit the data acquisition unit 22 to write data.

The inner port 11 and the outer port 26 are communication ports and correspond to IEEE802.3, for example. The inner port 11 has a communication path capable of communicating with the data generation unit 101. The outer port 26 has a communication path capable of communicating with the data storage unit 102. The names of the inner port 11 and the outer port 26 are for the sake of convenience, and merely indicate that they are physically different communication ports. For example, the inner port 11 may be connected to a wide area network such as the Internet, and the outer port 26 may be connected to a small area network such as a local area network.

The data receive unit 12 receives the data transmitted from the data generation unit 101 and writes the data in the shared memory 31. The data acquisition unit 22 monitors the shared memory 31, and when new data is written to the shared memory 31, the data is copied to the dedicated memory 23.

The inspection unit 24 inspects the data written in the dedicated memory 23 by the data acquisition unit 22. The inspection unit 24 acquires a database of malware from outside the data sharing device 1 via the outer port 26, for example, at regular time intervals. The inspection unit 24 detects malware by comparing a signature, for example, a hash value, stored in the database with a hash value of data written in the dedicated memory 23. When the hash value of the data written in the dedicated memory 23 matches the signature stored in the database, the inspection unit 24 discards the data written in the dedicated memory 23. The data inspection performed by the inspection unit 24 may be referred to as "security check ".

The data transmission unit 25 transmits the data checked by the inspection unit 24 to the data storage unit 102 via the outer port 26.

Various means can be used for data transmission and reception between the data receive unit 12 and the data generation unit 101. However, it is desirable not to add new software to the data generation unit 101. This is mainly due to the following two reasons. The first reason is that, as described in the "Problem to be Solved by the Invention ", there is a case where it is necessary to verify in advance that the new software does not adversely affect other program operations of the data generation unit 101 at a high cost before introducing the new software. The second reason is that there is a case where an environment for software development in the data generation unit 101 is already lost and does not exist, and the development itself cannot be performed. As a method without adding new software, for example, any of the following methods can be adopted.

The first method is a method using FTP (File Transfer Protocol). In this case, the data receive unit 12 is the FTP server and the data generation unit 101 is the FTP client. When the data receive unit 12 receives the FTP connection from the data generation unit 101, the area of the shared memory 31 mounted in advance by the first environment 10 is set as an initial directory, and writing to the directory is performed. In this case, the data generation unit 101 may transfer the file using a batch file created in advance, or may transfer the file manually by an operator.

In this case, the data receive unit 12 operates as an FTP server, and may be set so that data can be written in the area of the shared memory 31 mounted in advance by the first environment 10. Since the FTP client function is normally installed even in a relatively old operating system (OS) in many cases, the FTP client function can be realized without adding new software to the data generation unit 101.

The second method is a method of combining the file server function and a file copy function. The file server function is an NFS (Network File System) or an SMB (Server Message Block). The data receive unit 12 serves as a server, and the data generation unit 101 serves as a client. The data receive unit 12 sets the area of the shared memory 31 mounted in advance by the first environment 10 to be sharable. The data generation unit 101 mounts an area of the shared memory 31 provided by the data receive unit 12, and copies data to the mounted area by the file copy function.

The file copy function can use commands such as "cp "," rsync ", and "robocopy ". Since the file server function and the file copy function are normally installed even in a relatively old OS in many cases, they can be realized without adding new software to the data generation unit 101.

Various means can be used for data transmission and reception between the data transmission unit 25 and the data storage unit 102. For example, data may be transferred from the data transmission unit 25 to the data storage unit 102 using the FTP described above, with the data storage unit 102 serving as an FTP server and the data transmission unit 25 serving as an FTP client. Instead of FTP, SFTP (SSH File Transfer Protocol) or SCP (Secure Copy Protocol) may be used.

### (Apparatus Configuration)

FIG.2 is a configuration diagram of the data sharing device 1. The upper part of FIG.2 illustrates a hardware configuration, and the lower part of FIG. 2 illustrates a software configuration. The data sharing device 1 includes a CPU 41, a storage unit 42, a RAM 43, a inner port 11, and an outer port 26. The CPU 41 is a central processing unit, and realizes various functions by loading a program stored in a nonvolatile the storage unit, for example, the storage unit 42 which is a flash memory, into a RAM 43 and executing the program.

In the present embodiment, a container technique is used as shown in the lower part of FIG.2. That is, the host OS 51 operates on the hardware 50, and the container control unit 52 further operates thereon. The container control unit 52 manages a container in which the first environment 10 operates, a container in which the second environment 20 operates, and the shared memory 31. Each of the first environment 10 and the second environment 20 includes middleware for operating in the container environment, but the middleware is omitted for convenience of drawing.

The first software group included in the first environment 10 is software including the data receive unit 12. The second software group included in the second environment 20 is software including the data acquisition unit 22, the inspection unit 24, and the data transmission unit 25. The storage unit 42 stores software for implementing the host OS 51 and the container control unit 52, a container for implementing the first environment 10, and a container for implementing the second environment 20. A part of the RAM 43 is used as the shared memory 31 and the dedicated memory 23 of the second environment 20. The host OS 51 may be a real-time OS that guarantees real-time processing, that is, a response within a predetermined time, or may not be a real-time OS.

According to the first embodiment described above, the following effects can be obtained.
(1)The data sharing device 1 includes the first environment 10 having the inner port 11, the second environment 20 having the outer port 26 and operating independently of the first environment 10, and the shared memory 31 accessible from both the first environment 10 and the second environment 20. The first environment 10 includes a data receive unit 12 that stores data received from the data generation unit 101 via the inner port 11 in the shared memory 31. The second environment 20 includes the dedicated memory 23 that can be accessed only from within the second environment 20, the data acquisition unit 22 that writes data stored in the shared memory 31 to the dedicated memory 23, the inspection unit 24 that confirms the safety of data stored in the dedicated memory 23, and the data transmission unit 25 that transmits data stored in the dedicated memory 23 to the outside via the outer port 26. Therefore, data can be safely transferred from the data generation unit 101 to the data storage unit 102.
   Further, as compared with the case where data is moved from the data generation unit 101 to the data storage unit 102 by using a recording medium, the data is not manually moved, so that falsification of the data during the data movement does not occur in principle. Therefore, there is an advantage that it is not necessary to consider intentional falsification from the viewpoint of the data storage unit 102 which receives data, and there is no risk that intentional falsification is suspected from the viewpoint of the data providing side. It is a social demand to objectively prove that there is no data falsification, and it is one of the effects of the present invention to guarantee this. Further, when data is moved using a readable/writable semiconductor memory, it is assumed that the semiconductor memory is infected with malware. However, the use of the data sharing device 1 eliminates such a concern.
(2)The shared memory 31 is prohibited from being written by the second environment 20. Therefore, even if the second environment 20 is contaminated by malware, since there is no path for transmitting data to the first environment 10, the first environment 10 is not contaminated by malware, and the data generation unit 101 existing ahead is also protected from a threat of malware.
(3)The container control unit 52 that realizes the first environment 10 and the second environment 20 by virtualization technology is provided. The container control unit 52 further provides the shared memory 31 accessible to the first environment 10 and the second environment 20.
(4)The first environment 10 and the second environment 20 are implemented by containers. Therefore, the resources of the data sharing device 1 can be effectively used.
(5)The communication system includes the data sharing device 1 that receives data from the data generation unit 101, which can also be referred to as an industrial device, and the data storage unit 102 that communicates with the data sharing device 1. The data sharing device 1 includes two or more independent execution environments and the shared memory accessible from the plurality of execution environments. The first environment 10, which is one of the execution environments, communicates with the data generation unit 101, and the second environment 20, which is another one of the execution environments, communicates with the data storage unit 102. The second environment 20, which is the execution environment for communicating with the data storage unit 102, is set so that data cannot be written to the shared memory 31.
(6)The communication method executed by the data sharing device 1 includes: storing, by a program of the data receive unit 12 executed in the first environment 10, data received via the inner port 11 into the shared memory 31; writing, by programs of the data acquisition unit 22, the inspection unit 24, and the data transmission unit 25 executed in the second environment 20, the data stored in the shared memory 31 into the dedicated memory 23; confirming safety of the data stored in the dedicated memory 23; and transmitting the data stored in the dedicated memory 23 to the outside via the outer port 26.

### (Modification 1)

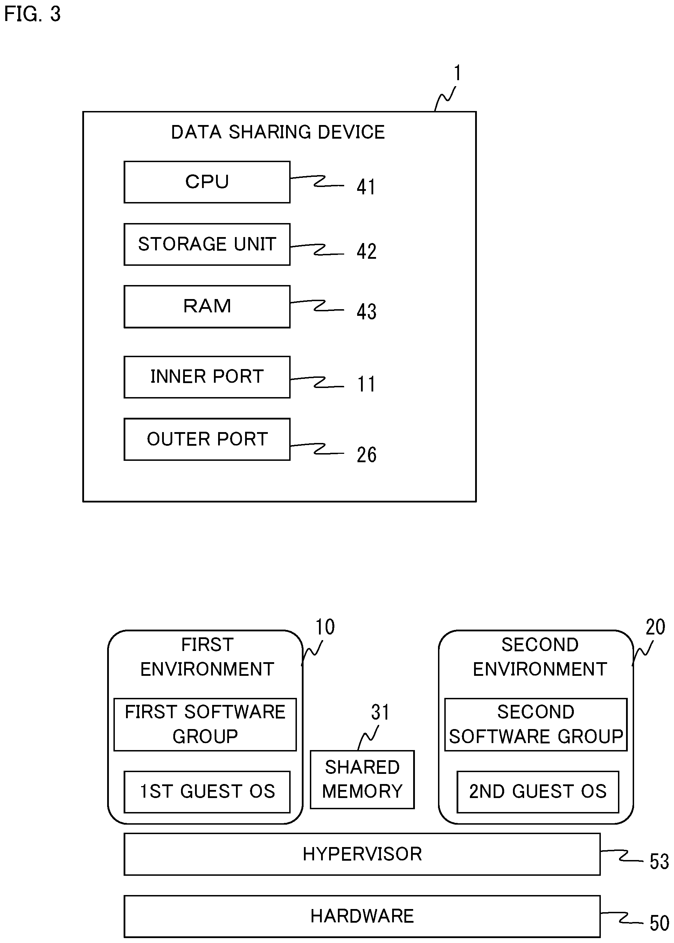

FIG.3 is a configuration diagram of the data sharing device 1 according to the first modification, and corresponds to FIG.2 according to the first embodiment. In the present modification, a virtual machine is used instead of a container to implement the first environment 10 and the second environment 20. Since the upper part of FIG.3 is the same as that of FIG.2, the description thereof will be omitted.

In the present modification, a hypervisor 53 that controls a virtual machine operates on the hardware 50. The hypervisor 53 may be a so-called bare metal type hypervisor that operates directly on the hardware 50, or may be a so-called host type hypervisor that operates on a host operating system (not shown).

The container control unit 52 manages a virtual machine on which the first environment 10 operates, a virtual machine on which the second environment 20 operates, and the shared memory 31.
Since each of the first environment 10 and the second environment 20 is a virtual machine, an OS is required for each of them. The first guest OS included in the first environment 10 and the second guest OS included in the second environment 20 may be the same or different. Each of the first environment 10 and the second environment 20 includes middleware for operating in a virtual environment, but the middleware is omitted for convenience of drawing.

The first guest OS is preferably a real-time OS that guarantees real-time processing, that is, a response within a predetermined time. This is because data transmitted from the data generation unit 101 can be reliably received. Both the first guest OS and the second guest OS may be real-time OSs.

The storage unit 42 stores software for implementing the hypervisor 53, a virtual machine for implementing the first environment 10, and a virtual machine for implementing the second environment 20. The second embodiment is the same as the first embodiment in that a part of the RAM 43 is used as the shared memory 31 and the dedicated memory 23 of the second environment 20.

According to the first modification, the following effects can be obtained.

(7)The first environment 10 and the second environment 20 are realized by virtual machines, and the operating system in the first environment 10 is a real-time OS capable of real-time processing. Therefore, the first environment 10 and the second environment 20 can use different OSs, and the data transmitted from the data generation unit 101 can be reliably received by using the real-time OS for the first environment 10.

### (Modification 2)

The data sharing device 1 may not have the inspection unit 24 in the second environment 20.

### -Second Embodiment-

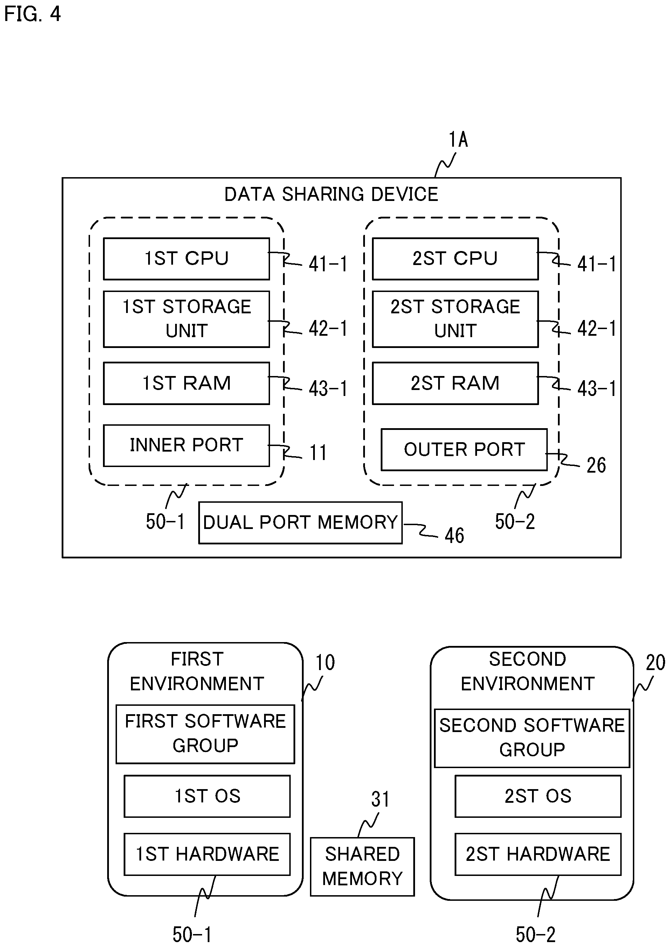

A second embodiment of the data sharing device will be described with reference to FIG.4. In the following description, the same components as those of the first embodiment are denoted by the same reference numerals, and differences will be mainly described. Points not particularly described are the same as those in the first embodiment. The present embodiment is different from the first embodiment mainly in that the first environment and the second environment are implemented by different hardware.

FIG.4 is a configuration diagram of a data sharing device 1A according to the second embodiment, and it corresponds to FIG.2 according to the first embodiment. As illustrated in the upper part of FIG.4, the data sharing device 1A includes a first CPU41-1, a first storage unit 42-1, a first RAM43-1, a inner port 11, a second CPU 41-2, a second storage unit 42-2, a second RAM 43-2, the outer port 26, and the dual port memory 46.

Hereinafter, the first CPU41-1, the first storage unit 42-1, the first RAM43-1, and the inner port 11 are also collectively referred to as the first hardware device 50-1. Hereinafter, the second CPU41-2, the second storage unit 42-2, the second RAM43-2, and the outer port 26 are also collectively referred to as the second hardware device 50-2.

The first CPU 41-1 is a central processing unit, and realizes the function of the first environment 10 by developing a program stored in a nonvolatile the storage unit, for example, the first storage unit 42-1 which is a flash memory, in a first RAM 43-1 which is readable and writable at high speed and executing the program. The second CPU 41-2 is a central processing unit, and realizes the function of the second environment 20 by developing a program stored in a nonvolatile the storage unit, for example, the second storage unit 42-2 which is a flash memory, in a second RAM 43-2 which is readable and writable at high speed and executing the program.

The dual port memory 46 has two connection ports and is a storage area accessible from both the first environment 10 and the second environment 20. Access to the dual port memory 46 is restricted by the port to which it is connected. Specifically, writing to the dual port memory 46 from a port to which the second environment 20 is connected is impossible. Note that the dual port memory 46 may be formed of a volatile element that is a storage element whose content disappears when power is lost, or may be formed of a non-volatile element that is an element whose content is retained even when power is lost. Therefore, the dual port memory 46 may be read as a shared folder as an image of a storage device.

As illustrated in the lower part of FIG.4, the first environment 10 and the second environment 20 are independent of each other in hardware. In other words, the first environment 10 and the second environment 20 are physically independent computers.

According to the second embodiment described above, the following effects can be obtained.

(8)The first environment 10 and the second environment 20 are physically independent computers, and the shared memory 31 is the dual port memory 46.

In each of the above-described embodiments and modifications, the configuration of the functional block is merely an example. Some functional configurations illustrated as separate functional blocks may be integrally configured, or a configuration represented by one functional block diagram may be divided into two or more functions. Further, a part of the functions of each functional block may be included in another functional block.

In each of the above-described embodiments and modifications, the data sharing device may include an input/output interface (not illustrated), and a program may be read from another device via a medium that can be used by the input/output interface and the data sharing device when necessary. Here, the medium refers to, for example, a storage medium that can be attached to and detached from the input/output interface, or a communication medium, that is, a wired, wireless, or optical network, or a carrier wave or a digital signal that propagates through the network. Some or all of the functions implemented by the program may be implemented by a hardware circuit or an FPGA.

In the relationship between the data sharing device 1 and the data storage unit 102, the inspection unit 24 may be arranged between the outer port 26 of the data sharing device 1 and the data storage unit 102. When a plurality of the data sharing devices 1 are connected to the data storage unit 102, the inspection unit 24 can be shared by connecting the outer ports 26 of the plurality of the data sharing devices 1 to one the inspection unit 24. By sharing, the hardware resources required for the data sharing device 1 can be reduced. In addition, by aggregating the inspection unit 24 at one location, if the pattern file in which the signatures of malware are collected is updated only at one location, all the inspection patterns for the plurality of the data sharing device 1 connected thereto can be updated.

The above-described embodiments and modifications may be combined with each other. Although various embodiments and modifications have been described above, the present invention is not limited to these contents. Other embodiments conceivable within the scope of the technical idea of the present invention are also included in the scope of the present invention.

### Reference Signs List

- 1, 1A: Data sharing device
- 10: First environment
- 12: Data receive unit
- 20: Second environment
- 22: Data acquisition unit
- 23: Dedicated memory
- 24: Inspection unit
- 25: Data transmission unit
- 26: Outer port
- 31: Shared memory
- 46: Dual port memory
- 52: Container control unit
- 53: Hypervisor

## Claims

1. A data sharing device comprising:
a first environment having a first communication port;
a second environment having a second communication port and operating independently of the first environment; and
a shared memory accessible from both the first environment and the second environment,
wherein the first environment comprises a data receive unit which store a data received via the first communication port in the shared memory,
wherein the second environment comprising:
a dedicated memory accessible only from within said the second environment;
a data acquisition unit for writing the data stored in the shared memory to the dedicated memory;
an inspection unit checking security of the data stored in the dedicated memory; and
a data transmission unit configured to transmit the data stored in the dedicated memory to the outside of the data sharing device via the second communication port.

2. The data sharing device according to claim 1,
wherein the shared memory is prohibited from being written by the second environment.

3. The data sharing device according to claim 1, further comprising a virtualization control unit for realizing the first environment and the second environment by a virtualization technique,
wherein the virtualization control unit further provides the shared memory accessible from the first environment and the second environment.

4. The data sharing device according to claim 3,
wherein the first environment and the second environment are realized by a virtual machine or a container.

5. The data sharing device according to claim 3,
wherein the first environment and the second environment are realized by virtual machines, and
wherein operating system in the first environment is capable of real-time processing.

6. The data sharing device according to claim 1,
wherein each of the first environment and the second environment is a physically independent computer, and
wherein the shared memory is a dual port memory.

7. A communication system comprising:
a terminal for receiving data of an industrial machine; and
a server for communicating with the terminal,
wherein the terminal comprises two or more independent execution environments and a shared memory accessible from a plurality of the execution environments,
wherein one of the execution environments communicates with the industrial machine, another one of the execution environments communicates with the server, and the another one of the execution environments communicating with the server is set so as not to be able to write to the shared memory.

8. A communication method performed by a data sharing device comprising a first environment having a first communication port, a second environment having a second communication port and operating independently of the first environment, and a shared memory accessible from both the first environment and the second environment, the method comprising:
wherein the second environment includes a dedicated memory accessible only from within the second environment, and
storing, by a program executed in the first environment, data received via the first communication port in the shared memory;
wherein a program executed in the second environment executing:
writing the data stored in the shared memory to the dedicated memory;
verifying security of the data stored in the dedicated memory; and
transmitting the data stored in the dedicated memory to the outside of the data sharing device via the second communication port.
